# FASCICULE DE BREVET EUROPEEN

(11) **EP 3 304 503 B1**
(45) Date de publication et mention de la délivrance du brevet: **30.08.2023**
(21) Numéro de dépôt: 16732693.3
(22) Date de dépôt: 07.06.2016
(51) Int. Cl.: G07C 9/00, H04W 4/02, H04W 12/06, H04W 12/08

(54) **PROCÉDÉ DE CONTRÔLE D'ACCÈS SÉCURISÉ AVEC LECTEUR ET TERMINAL MOBILE, NOTAMMENT DU TYPE TERMINAL TÉLÉPHONIQUE**
VERFAHREN ZUR SICHEREN ZUGANGSSTEUERUNG MIT LESER UND MOBILEM ENDGERÄT, INSBESONDERE WIE ETWA EIN TELEFONENDGERÄT
SECURE ACCESS CONTROL METHOD WITH READER AND MOBILE TERMINAL, IN PARTICULAR SUCH AS A TELEPHONE TERMINAL

(30) Priorité: 08.06.2015 FR 1555216
(43) Date de publication de la demande: 11.04.2018
(60) Demande divisionnaire: 18168506.6
(73) Titulaire: Systemes Et Technologies Identification, 13850 Greasque (FR)
(72) Inventeur: DUPART, Vincent, 83470 Saint-maximin-la-sainte-beaume (FR); SILVE, Jérôme, 13790 Rousset (FR); POITRAT, Sylvain, 13850 Greasque (FR)
(74) Mandataire: Germain Maureau
(86) Numéro de dépôt international: PCT/FR2016/051358
(87) Numéro de publication internationale: WO 2016/198780

(56) Documents cités:
- WO-A1-2015/023737
- US-A1- 2013 136 046
- US-A1- 2013 281 021

## Description

La présente invention se rapporte à un procédé de contrôle d'accès sécurisé.

Dans le domaine du contrôle d'accès, il est connu d'employer des lecteurs de contrôle d'accès sécurisé comprenant une puce de radio-identification active afin de permettre un contrôle d'accès sans contact et à courte-distance selon la technologie RFID, généralement au moyen de badges munis d'une puce de radio-identification passive.

Il est également connu d'employer, à la place de tels badges, des terminaux mobiles du type terminal téléphonique (ou smartphone) mettant en oeuvre une radiocommunication sécurisée avec le lecteur de contrôle d'accès sécurisé selon un protocole de communication sans fil longue distance du type BLUETOOTH^{®}.

L'état de la technique peut notamment être illustré par l'enseignement du document US2013/136046 qui divulgue le préambule de la revendication 1, du document WO2015/023737 qui divulgue un procédé de contrôle d'accès comprenant un dispositif d'accès à distance, tel qu'un terminal téléphonique, et une serrure électronique qui communiquent ensemble pour verrouiller et déverrouiller une porte, et aussi du document US2013/281021 qui divulgue un procédé de contrôle d'accès à distance au moyen d'un terminal téléphonique.

Cependant, la longue portée d'une telle radiocommunication entre le terminal téléphonique et le lecteur de contrôle d'accès présente un inconvénient majeur lorsque plusieurs lecteurs de contrôle d'accès se situent dans le champ de portée du terminal téléphonique, avec des risques de conflit soulevant des failles de sécurité.

La présente invention a pour but de résoudre cet inconvénient, en proposant un procédé de contrôle d'accès sécurisé adapté pour des radiocommunications sécurisées selon des protocoles de communication sans fil longue distance, tout en garantissant un niveau de sécurité élevé avec plusieurs lecteurs de contrôle d'accès sécurisé susceptibles de se situent dans le champ de portée d'un terminal mobile.

A cet effet, elle propose un procédé de contrôle d'accès sécurisé conforme à la revendication 1.

Ainsi, le terminal mobile établit une connexion radiofréquence (ou radio-connexion ou radiocommunication) avec un lecteur en fonction de son éloignement, et uniquement si la ou les conditions d'accès sont respectées pour éviter des communications intempestives ou non désirées.

Dans une utilisation particulière, lors de l'étape b), le terminal mobile réceptionne au moins deux signaux d'annonce provenant d'au moins deux lecteurs distincts ; et lors de l'étape c), le terminal mobile compare les puissances en réception de chaque lecteur et détermine le lecteur proche comme étant celui dont la puissance en réception correspondante est la plus élevée.

Ainsi, lorsque plusieurs lecteurs de contrôle d'accès se situent dans le champ de portée du terminal mobile, ce dernier ne peut établir de radio-connexion qu'avec le lecteur le plus proche.

Selon une possibilité, lors de l'étape e), le terminal mobile compare la puissance en réception du signal d'annonce du lecteur proche avec un seuil prédéfini et, lors de l'étape f), le terminal mobile établit une connexion radiofréquence avec le lecteur proche si ladite puissance en réception est supérieur audit seuil.

Ainsi, une nouvelle condition est imposée sur la base de cette puissance en réception, le seuil étant fixé pour traduire une proximité du terminal mobile vis-à-vis du lecteur.

Selon l'invention, lors de l'étape d), une action d'accès correspond à une approche, avec ou sans contact, de l'utilisateur, notamment d'une main de l'utilisateur, à proximité d'un système de détection de présence intégré au lecteur proche, et la détection de ladite approche par ledit système de détection de présence entraîne l'émission, par ledit lecteur proche, d'un nouveau signal d'annonce comprenant les paramètres de sécurité et un indice de détection signalant la détection de ladite approche, et le terminal mobile reçoit le nouveau signal d'annonce avec ledit indice de détection et traduit cet indice de détection en un titre d'accès représentatif de ladite approche.

Ainsi, la radio-connexion entre le terminal mobile et le lecteur proche ne s'établit qu'après détection de l'approche de l'utilisateur à proximité du lecteur, sauf si d'autres conditions d'accès sont imposées par le lecteur.

Si le lecteur n'impose pas de conditions d'accès supplémentaires, l'utilisateur pourra franchir l'accès sécurisé uniquement en s'approchant du lecteur (notamment en approchant sa main), sans avoir besoin de manipuler son terminal mobile qui pourra demeurer à l'intérieur d'un vêtement ou d'un sac porté par l'utilisateur et qui sera obligatoirement à proximité du lecteur pour échanger avec lui.

Dans une réalisation particulière, le système de détection de présence correspond à un capteur capacitif intégré au lecteur proche, offrant ainsi une détection capacitive, avec ou sans contact, de l'approche du corps de l'utilisateur vis-à-vis du lecteur.

Selon un mode de réalisation non couvert par les revendications, lors de l'étape d), une action d'accès correspond à une pression sur un écran tactile, notamment de manière ponctuelle, maintenue ou selon une trajectoire prédéfinie, ou sur un bouton du terminal mobile, et le terminal mobile traduit cette pression en un titre d'accès représentatif de ladite pression.

Ainsi, la radio-connexion entre le terminal mobile et le lecteur proche ne s'établit qu'après la pression sur l'écran ou sur le bouton du terminal mobile, sauf si d'autres conditions d'accès sont imposées par le lecteur. La pression sur l'écran tactile peut correspondre à la pression sur un bouton virtuel dédié et symbolisé par un icône sur l'écran tactile, ce bouton virtuel pouvant par exemple être présent sur un écran de veille, un écran d'accueil ou un écran d'une page ouverte par une application informatique.

Selon un autre mode de réalisation non couvert par les revendications, lors de l'étape d), une action d'accès correspond à un mouvement prédéfini d'impact ou de déplacement du terminal mobile détecté par un détecteur de mouvement, notamment du type accéléromètre, intégré au terminal mobile, et le terminal mobile traduit cette détection par l'accéléromètre en un titre d'accès représentatif dudit mouvement prédéfini.

Ainsi, la radio-connexion entre le terminal mobile et le lecteur proche ne s'établit qu'après la détection du mouvement prédéfini par le détecteur de mouvement.

Cette détection peut s'opérer lorsque le terminal mobile est en mode veille ou non, ou bien uniquement après avoir lancé un programme informatique dédié, notamment une application informatique sur un téléphone mobile. Le détecteur de mouvement détecte ainsi un mouvement du terminal mobile et le terminal mobile reconnaît que ce mouvement correspond au mouvement prédéfini pour établir la radio-connexion avec le lecteur.

Dans un mode de réalisation particulier non couvert par les revendications, le mouvement prédéfini correspond à mouvement d'impact composé d'une succession d'au moins deux coups consécutifs portés sur le terminal mobile.

De cette manière, l'utilisateur se contente de taper sur le terminal mobile, par exemple à travers le tissu d'une poche de vêtement ou d'un sac, pour initier la radio-connexion entre le terminal mobile et le lecteur et ainsi franchir l'accès sécurisé.

Selon un autre mode de réalisation non couvert par les revendications, lors de l'étape d), une action d'accès correspond à une action de déverrouillage du terminal mobile afin de lui faire quitter son mode veille, et le terminal mobile traduit ce déverrouillage en un titre d'accès représentatif dudit déverrouillage.

Dans ce cas de figure, le terminal mobile établit une radio-connexion avec le lecteur proche si le terminal mobile est déverrouillé, et pas en veille, sauf si d'autres conditions d'accès sont imposées par le lecteur.

Selon un autre mode de réalisation non couvert par les revendications, lors de l'étape d), une action d'accès correspond à l'activation d'un programme informatique d'accès stocké dans le terminal mobile, notamment accessible sous la forme d'une application pour téléphone mobile, et le terminal mobile traduit cette activation en un titre d'accès représentatif de ladite activation du programme informatique.

Ainsi, la radio-connexion entre le terminal mobile et le lecteur proche ne s'établit qu'après l'activation du programme informatique, sauf si d'autres conditions d'accès sont imposées par le lecteur.

De manière optionnelle et avantageuse, avant la phase d'authentification, il peut être prévue une étape d'identification complémentaire basée sur une action d'identification de l'utilisateur du terminal mobile, ladite action d'identification consistant en une action prédéfinie sur le terminal mobile pour générer un signal d'identification qui est réceptionné et analysé par le microcontrôleur pour autoriser le passage à la phase d'authentification.

Ainsi, en plus de l'authentification cryptographique des données d'identification par le lecteur, le procédé profite du terminal mobile pour assurer une identification complémentaire en exploitant les possibilités de calcul offertes par le terminal mobile.

Avantageusement, l'étape d'identification complémentaire est gérée par le programme informatique préalablement activé sur le terminal mobile.

Conformément à une autre caractéristique de l'invention, l'action d'identification correspond à une saisie d'un code sur un clavier du terminal mobile, ou à un contrôle biométrique sur un dispositif biométrique intégré au terminal mobile, ou à une reconnaissance faciale exploitant une prise d'image par une caméra intégrée au terminal mobile, ou à une reconnaissance vocale exploitant une prise de sons par un microphone intégré au terminal mobile.

Selon l'invention, l'émission du signal d'annonce par chaque lecteur de contrôle d'accès et la radio-connexion entre le terminal mobile et le lecteur de contrôle d'accès concerné sont établies selon un protocole de communication sans fil longue distance du type BLUETOOTH@, WIFI^{®}, WIBREE^{®}, WIMAX^{®}, LORA^{®}, ZIGBEE^{®} ou similaire.

Selon une autre possibilité, chaque lecteur de contrôle d'accès comprend également au moins un système complémentaire de contrôle d'accès choisi dans la liste comprenant :
- une puce de radio-identification active afin de permettre un contrôle complémentaire d'accès selon la technologie RFID ;
- un dispositif de contrôle biométrique afin de permettre un contrôle complémentaire d'accès par biométrie ;
- un dispositif de prise d'image afin de permettre un contrôle complémentaire d'accès par reconnaissance faciale ;
- un clavier afin de permettre un contrôle complémentaire d'accès par saisie d'un code.

Ainsi, plusieurs possibilités sont offertes pour l'accès sécurisé avec un tel lecteur, soit avec un terminal mobile comme décrit précédemment, soit avec un système complémentaire de contrôle d'accès qui nécessitera d'employer un badge RFID (badge actif ou passif) pour la puce de radio-identification active, ou de connaître un code avec le clavier (sous forme d'écran tactile ou sous forme de pavé à touches), ou d'effectuer un contrôle biométrique (empreinte digitale, rétine, iris, ...), ou d'effectuer une prise d'image pour une reconnaissance faciale.

Selon une caractéristique, lors de l'étape d), le terminal mobile est avertit de l'action d'accès sans que cet avertissement ne soit lié à la détermination de la puissance en réception réalisée lors de l'étape b).

Autrement dit, ce n'est pas la détermination de la puissance en réception réalisée lors de l'étape b) qui va servir d'avertissement de l'action d'accès. De la sorte, la détermination de la puissance en réception réalisée lors de l'étape b) ne servira pas de déclencheur pour basculer dans l'étape d) qui conduira le terminal mobile a traduit une action d'accès par un titre d'accès.

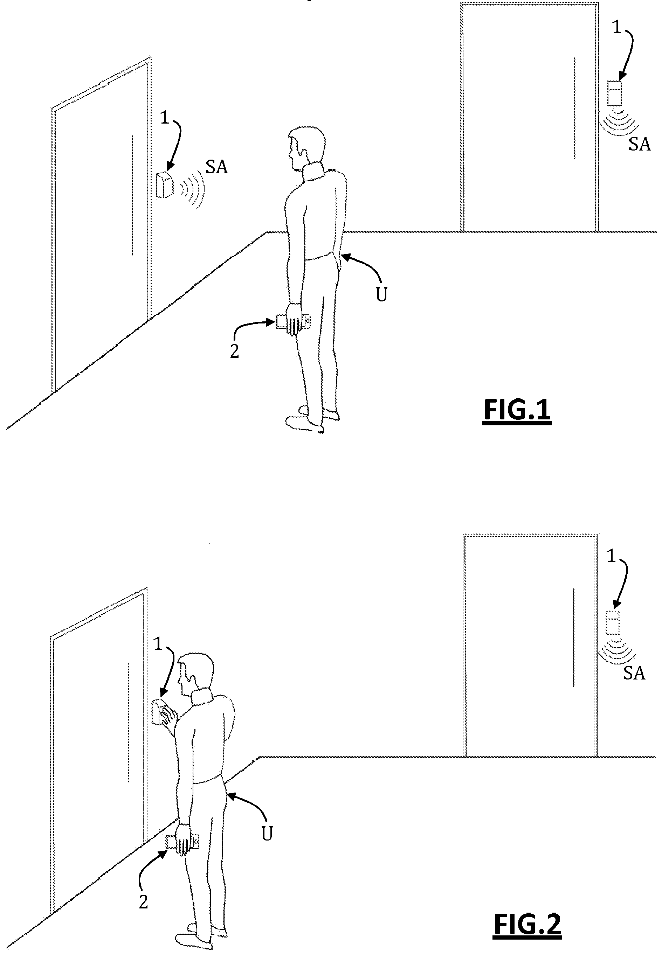

D'autres caractéristiques et avantages de la présente invention apparaîtront à la lecture de la description détaillée ci-après faite en référence aux figures annexées dans lesquelles les figures 1, 2 et 6 illustrent différentes situations et étapes lors de la mise en oeuvre d'un procédé de contrôle d'accès conforme à l'invention.

En référence à la figure 1, le procédé conforme à l'invention est mis en oeuvre avec au moins deux lecteurs 1 de contrôle d'accès sécurisé et au moins un terminal mobile 2 de radiocommunication porté par un utilisateur U. Le procédé peut également être mis en oeuvre avec un seul lecteur 1.

Chaque lecteur 1 comprend un boîtier recevant intérieurement des moyens de radiocommunication selon un protocole de communication sans fil longue distance du type BLUETOOTH@, WIFI^{®}, WIBREE^{®}, WIMAX^{®}, LORA^{®}, ZIGBEE^{®} ou similaire, associés à un microcontrôleur en liaison (sans fil ou filaire) avec une unité de traitement distante (non illustrée).

Le terminal mobile 2 est un terminal téléphonique, du type smartphone, mais pourrait également être une tablette numérique, un assistant numérique personnel ou un badge ou porte-clé dit intelligent équipé d'une batterie et d'une carte ou puce électronique.

Ce terminal mobile 2 intègre des moyens de radiocommunication selon un protocole de communication sans fil longue distance du type BLUETOOTH@, WIFI^{®}, WIBREE^{®}, WIMAX^{®}, ZIGBEE^{®} ou similaire, afin de pouvoir communiquer avec les lecteurs 1, ainsi qu'une électronique de commande.

Le terminal mobile 2 intègre aussi un écran tactile et un détecteur de mouvement, comme par exemple un accéléromètre et notamment un accéléromètre tridimensionnel.

En référence à la figure 1, dans une étape a), chaque lecteur 1 émet répétitivement, notamment de manière périodique, un signal d'annonce SA comprenant, dans sa trame, des paramètres de statut et des paramètres de sécurité. Les paramètres de statut traduisent le statut ou l'état du lecteur 1 et indiquent, en fonctionnement initial, un statut libre ou disponible. Les paramètres de sécurité définissent au moins une condition d'accès à une mise en communication avec le lecteur 1.

En référence à la figure 1, dans une étape b), lorsqu'un utilisateur U, porteur d'un terminal mobile 2, se situe dans le champ de portée d'au moins deux lecteurs 1, le terminal mobile 2 reçoit les signaux d'annonce SA des différents lecteurs 1. Dans ce cas de figure, le terminal mobile 2 détermine une puissance en réception de chaque signal d'annonce SA.

Ensuite, dans une étape c), le terminal mobile 2 compare ces puissances en réception et détermine le lecteur 1 proche comme étant celui dont la puissance en réception correspondante est la plus élevée. Dans l'exemple de la figure 1, le lecteur 1 proche est celui de gauche. Le terminal mobile 2 compare également ces puissances en réception avec un seuil de puissance prédéterminé.

Puis, dans une étape d), le terminal mobile 2 est avertit d'une action dite d'accès initiée par l'utilisateur U sur le terminal mobile 2 ou sur le lecteur 1 proche, et traduit cette action d'accès par un titre d'accès représentatif de ladite action d'accès.

En référence à la figure 2, une action d'accès possible selon l'invention correspond à une approche, avec ou sans contact, de la main de l'utilisateur U à proximité d'un système de détection de présence (notamment du type capteur capacitif) intégré au lecteur 1 proche.

Cette détection de l'approche ou de la présence de la main par le système de détection de présence entraîne l'émission, par le lecteur 1 proche, d'un nouveau signal d'annonce comprenant, dans sa trame, les paramètres de statut et les paramètres de sécurité, où les paramètres de sécurité sont inchangés et les paramètres de statut indiquent un statut « détection de présence » suite à la détection de l'approche de la main. En d'autres termes, le nouveau signal d'annonce comprend un indice de détection (dans les paramètres de statut) qui signalent la détection de l'approche de la main.

Ainsi, le terminal mobile 2 est avertit de cette action d'approche de la main en recevant le nouveau signal d'annonce avec cet indice de détection, et le terminal mobile 2 traduit cet indice de détection en un titre d'accès représentatif de ladite approche de la main. Il est à noter que, dans ce cas de figure, l'utilisateur U peut conserver son terminal mobile 2 en main, dans sa poche ou dans un sac, sauf si d'autres conditions d'accès nécessitent d'agir sur le terminal mobile 2.

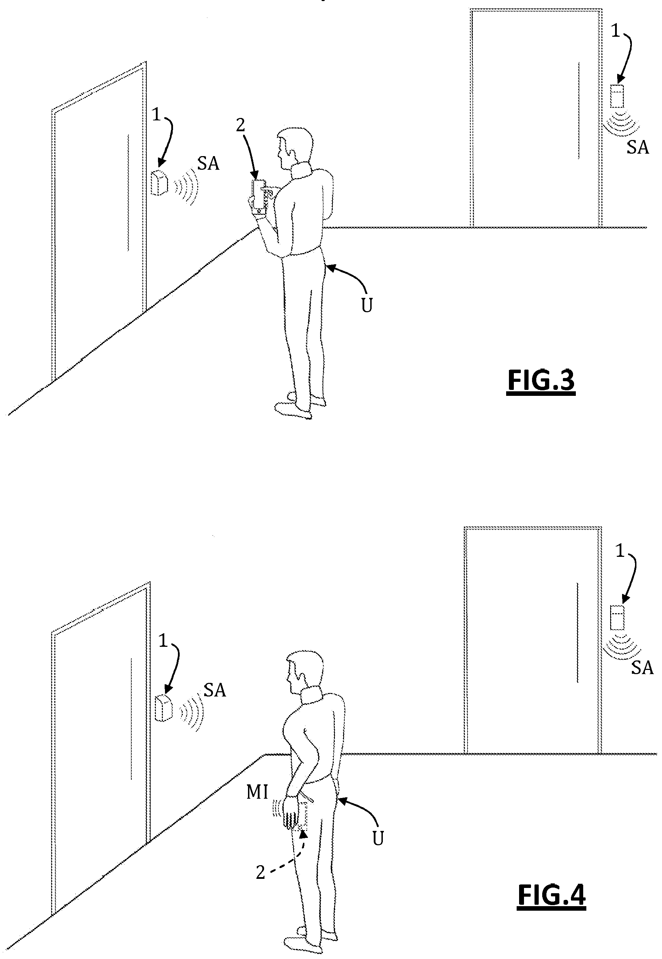

En référence à la figure 3, une action d'accès possible selon un mode de réalisation non couvert par les revendications correspond à une pression, avec un ou plusieurs doigts, sur l'écran tactile du terminal mobile 2 (en variante, cette pression peut s'exercer sur un bouton du terminal mobile 2).

Cette pression peut s'effectuer sur un bouton virtuel présent sur l'écran de veille du terminal mobile 2, ou bien visible seulement après avoir ouvert/activé un programme informatique (par exemple une application informatique sur smartphone).

Cette pression peut s'effectuer également dans une interface dédiée (notamment au sein d'une application dédiée) et selon une trajectoire prédéfinie, afin de définir un symbole prédéfini. Le terminal mobile traduit ensuite cette pression en un titre d'accès représentatif de ladite pression.

Egalement en référence à la figure 3, une action d'accès possible selon un mode de réalisation non couvert par les revendications correspond à l'activation d'un programme informatique d'accès stocké dans le terminal mobile 2, notamment sous la forme d'une application pour smartphone. De manière classique, cette activation est réalisée en cliquant, sur l'écran tactile, sur un icône dédié. Le terminal mobile traduit cette activation en un titre d'accès représentatif de ladite activation du programme informatique.

Egalement en référence à la figure 3, une action d'accès possible selon un mode de réalisation non couvert par les revendications correspond à une action de déverrouillage du terminal mobile 2 afin de le faire passer d'un mode veille à un mode activé ou réveillé ; cette action de déverrouillage s'opérant classiquement en appuyant sur un bouton ou sur l'écran tactile. Le terminal mobile 2 traduit ce déverrouillage en un titre d'accès représentatif dudit déverrouillage.

En référence à la figure 4, une action d'accès possible selon un mode de réalisation non couvert par les revendications correspond à un mouvement prédéfini d'impact MI du terminal mobile 2 détecté par le détecteur de mouvement (non illustré) intégré au terminal mobile 2, autrement dit un mouvement au cours duquel le terminal mobile 2 subit au moins un impact ou choc, de préférence de faible amplitude pour éviter d'endommager le terminal mobile 2.

Concernant le type de mouvement d'impact MI, il peut par exemple s'agir d'un mouvement au cours duquel l'utilisateur U applique une succession d'au moins deux coups consécutifs portés sur le terminal mobile 2.

Comme visible sur la figure 4, le terminal mobile 2 peut rester dans une poche de vêtement (ou dans un sac) durant ce mouvement d'impact MI. Ce mouvement d'impact peut être détecté alors que le terminal mobile 2 est en mode veille. Le terminal mobile 2 traduit cette détection d'un impact ou d'une succession d'impacts par le détecteur de mouvement en un titre d'accès représentatif dudit mouvement d'impact prédéfini.

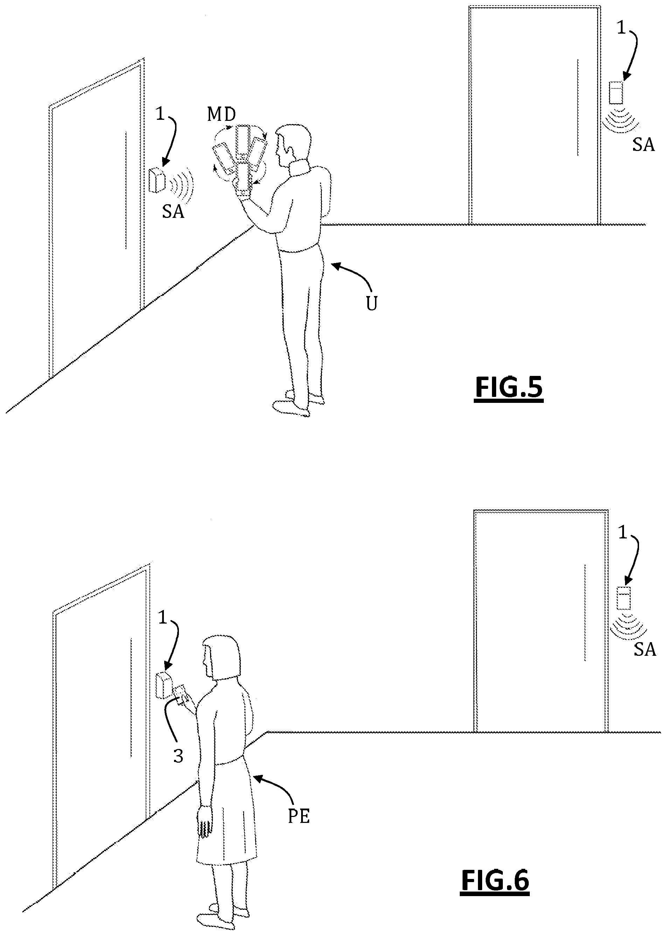

En référence à la figure 5, une action d'accès possible selon un mode de réalisation non couvert par les revendications correspond à un mouvement prédéfini de déplacement MD du terminal mobile 2 détecté par le détecteur de mouvement (non illustré) intégré au terminal mobile 2.

Concernant le type de mouvement de déplacement MD, il peut par exemple s'agir d'un mouvement au cours duquel l'utilisateur U prend en main le terminal mobile 2 et lui fait suivre une trajectoire prédéfinie dans l'espace, par exemple en lui faisant suivre une trajectoire de forme donnée comme illustré schématiquement et à titre d'exemple sur la figure 5 avec une trajectoire sensiblement circulaire.

Ce mouvement de déplacement MD peut être détecté alors que le terminal mobile 2 est en mode veille, ou bien après avoir ouvert un programme informatique dédié. Le terminal mobile 2 traduit cette détection par le détecteur de mouvement en un titre d'accès représentatif dudit mouvement de déplacement MD prédéfini.

Ensuite, lors d'une étape e), le terminal mobile 2 vérifie la ou toutes les conditions d'accès définie par les paramètres de sécurité contenus dans le signal d'annonce SA du lecteur 1 proche sont remplies, autrement dit vérifie si le ou chaque titre d'accès correspond à une condition d'accès.

Dans le cas de l'exemple de la figure 2, lors de l'étape e), le terminal mobile 2 vérifie si ledit titre d'accès représentatif de l'approche de la main correspond à une condition d'accès et, de manière supplémentaire, il compare la puissance en réception du nouveau signal d'annonce avec un seuil de puissance prédéfini.

Ainsi, une nouvelle condition se traduit par cette comparaison de puissance de sorte que, lors de l'étape f), le terminal mobile 2 établit une radio-connexion avec le lecteur 1 proche si cette puissance en réception est supérieur audit seuil de puissance, ce seuil étant calculé pour traduire la proximité du terminal mobile 2 vis-à-vis du lecteur 1.

Puis, lors d'une étape f), si les conditions d'accès sont remplies, alors le terminal mobile 2 établit une radio-connexion avec le lecteur 1 proche, cette radio-connexion ayant pour effet d'inhiber l'émission du signal d'annonce SA par ledit lecteur 1, autrement dit cette radio-connexion entraîne la cessation de l'émission du signal d'annonce SA par le lecteur 1 proche. A la fin, le procédé passe dans une phase d'authentification.

En cessant d'émettre le signal d'annonce SA, aucun autre terminal mobile 2 peut entrer en radio-connexion avec le lecteur 1 proche, et ce lecteur 1 devient ainsi invisible pour les éventuels autres terminaux mobiles 2 présents dans l'environnement.

Lors de la phase d'authentification, le terminal mobile 2 transmet ses données d'identification et le microcontrôleur du lecteur 1 proche authentifie ses données d'identification et, ensuite, transmet ses données d'identification authentifiées à destination de l'unité de traitement distante.

Cette phase d'authentification peut être du type à authentification simple ou mutuelle.

A titre d'exemple, lors d'une authentification simple, le terminal mobile 2 et le lecteur 1 proche entrent en radio-connexion sécurisée et successivement :
- le lecteur 1 communique au terminal mobile 2 son propre identifiant (comme par exemple un numéro de série) ;
- le terminal mobile 2 calcule une signature à partir de cet identifiant du lecteur 1 et également à partir des données d'identification du terminal mobile 2 ;
- le terminal mobile 2 transmet au lecteur 1 ses données d'identification ainsi que cette signature ;
- le microcontrôleur du lecteur 1 vérifie avec la signature l'authenticité des données d'identification, avant de transmettre celles-ci à l'unité de traitement distante.

Le microcontrôleur du lecteur 1 peut authentifier les données d'identification avec la clé publique d'une paire de clés publique/privée, cette clé publique étant stockée dans une mémoire, de préférence une mémoire sécurisée, associée au microcontrôleur.

L'unité de traitement récupérera ensuite ces données d'identification à des fins de traitement et de décision d'une ou plusieurs actions, telles que par exemple déverrouiller un accès, lancer une alerte, actionner un système domotique, historier des informations de passage, etc.

De manière supplémentaire, il peut être prévu que, avant la phase d'authentification, le procédé met en oeuvre une étape d'identification complémentaire basée sur une action d'identification de l'utilisateur U du terminal mobile 2, cette action d'identification consistant en une action prédéfinie sur le terminal mobile 2 pour générer un signal d'identification qui est réceptionné et analysé par le microcontrôleur pour autoriser la transmission des données d'identification authentifiées propres au terminal mobile à destination de l'unité de traitement distante.

Autrement dit, bien que les conditions d'accès soient remplies, il peut être prévu de demander à l'utilisateur U de réaliser une action d'identification pour obtenir l'accès, cette action d'identification se faisant sur le terminal mobile 2. Cette action d'identification peut être réalisée sur une interface d'un programme informatique dédié du terminal mobile 2, et peut consister en la saisie d'un code, un contrôle biométrique, une reconnaissance faciale ou une reconnaissance vocale.

Le lecteur 1 peut également intégrer au moins un système complémentaire de contrôle d'accès (non illustré) choisi dans la liste comprenant :
- une puce de radio-identification active afin de permettre un contrôle complémentaire d'accès selon la technologie RFID ;
- un dispositif de contrôle biométrique afin de permettre un contrôle complémentaire d'accès par biométrie, notamment par contrôle d'empreinte digitale, de rétine ou d'iris ;
- un dispositif de prise d'image, tel qu'une caméra numérique, afin de permettre un contrôle complémentaire d'accès par reconnaissance faciale.
- un clavier afin de permettre un contrôle complémentaire d'accès par saisie d'un code.

Ainsi, et comme illustré sur la figure 6, une personne PE non détentrice d'un terminal mobile 2 adapté pour la mise en oeuvre du procédé décrit précédemment, peut obtenir l'accès au moyen d'un tel système complémentaire de contrôle d'accès.

Dans l'exemple de la figure 6, la personne PE détient un badge 3 muni d'une puce RFID passive qui communique avec une puce de radio-identification active intégrée au lecteur 1, en vue d'obtenir l'accès.

## Revendications

1. Procédé de contrôle d'accès sécurisé utilisant :
- au moins un lecteur (1) de contrôle d'accès sécurisé comprenant un boîtier recevant intérieurement des moyens de radiocommunication associés à un microcontrôleur en liaison avec une unité de traitement distante ; et
- au moins un terminal mobile (2) de radiocommunication, notamment du type terminal téléphonique, porté par un utilisateur (U) ;
ledit procédé de contrôle d'accès mettant en oeuvre, avant une phase d'authentification, les étapes suivantes :
a) le ou chaque lecteur (1) de contrôle d'accès émet répétitivement un signal d'annonce (SA) comprenant des paramètres de sécurité définissant au moins une condition d'accès à une mise en communication avec le lecteur (1) de contrôle d'accès correspondant ;
b) le terminal mobile (2) réceptionne, dans un champ de portée donné, le ou chaque signal d'annonce (SA) et détermine une puissance en réception du ou de chaque signal d'annonce (SA) ;
c) le terminal mobile (2) évalue la ou chaque puissance en réception afin d'établir un paramètre dit de distance traduisant l'éloignement entre le terminal mobile (2) et le ou chaque lecteur (1), et reconnaît un lecteur (1) comme étant un lecteur (1) proche en fonction de cette évaluation ;
ledit procédé de contrôle d'accès étant **caractérisé en ce qu'**il comprend en outre les étapes suivantes :
d) le terminal mobile (2) est avertit d'une action dite d'accès initiée par l'utilisateur (U) vis-à-vis du lecteur (1) proche et traduit ladite action d'accès par un titre d'accès audit lecteur (1) proche, notamment en fonction du paramètre de distance associé audit lecteur (1) proche, ladite action d'accès correspondant à une approche, avec ou sans contact, d'une main ou du corps de l'utilisateur (U), à proximité d'un système de détection de présence intégré au lecteur (1) proche, et la détection de ladite approche par ledit système de détection de présence entraîne l'émission, par ledit lecteur (1) proche, d'un nouveau signal d'annonce (SA) comprenant les paramètres de sécurité et un indice de détection signalant la détection de ladite approche, et le terminal mobile (2) reçoit le nouveau signal d'annonce (SA) avec ledit indice de détection et traduit cet indice de détection en un titre d'accès représentatif de ladite approche de la main ou du corps de l'utilisateur (U) ;
e) le terminal mobile (2) vérifie si le titre d'accès représentatif de ladite approche de la main ou du corps de l'utilisateur (U) correspond à une condition d'accès définie par les paramètres de sécurité contenus dans le nouveau signal d'annonce (SA) dudit lecteur (1) proche ;
f) si le titre d'accès correspond à ladite condition d'accès, et si les éventuelles autres conditions d'accès sont remplies, alors le terminal mobile (2) établit une connexion radiofréquence avec le lecteur (1) proche, ladite connexion radiofréquence ayant pour effet d'inhiber l'émission du signal d'annonce par ledit lecteur (1), ladite condition d'accès imposant que la connexion radiofréquence entre le terminal mobile (2) et le lecteur (1) proche ne s'établisse qu'après détection de l'approche de l'utilisateur à proximité du lecteur (1) proche ;
et enfin le procédé passe dans la phase d'authentification durant laquelle le terminal mobile (2) transmet ses données d'identification et le microcontrôleur du lecteur (1) proche authentifie ses données d'identification, et à l'issue de laquelle le microcontrôleur du lecteur (1) proche transmet les données d'identification authentifiées propres audit terminal mobile (2) à destination de l'unité de traitement distante ;
**et en ce que** l'émission du signal d'annonce (SA) par chaque lecteur (1) de contrôle d'accès et la radiocommunication entre le terminal mobile (2) et le lecteur (1) de contrôle d'accès concerné sont établies selon un protocole de communication sans fil longue distance du type BLUETOOTH^{®}, WIFI^{®}, WIBREE^{®}, WIMAX^{®} LORA^{®} ZIGBEE^{®} ou similaire.

2. Procédé selon la revendication 1, dans lequel :
- lors de l'étape b), le terminal mobile (2) réceptionne au moins deux signaux d'annonce (SA) provenant d'au moins deux lecteurs (1) distincts ; et
- lors de l'étape c), le terminal mobile (2) compare les puissances en réception de chaque lecteur (1) et détermine le lecteur (1) proche comme étant celui dont la puissance en réception correspondante est la plus élevée.

3. Procédé selon l'une quelconque des revendications précédentes, dans lequel, lors de l'étape e), le terminal mobile (2) compare également la puissance en réception du signal d'annonce (SA) du lecteur (1) proche avec un seuil prédéfini et, lors de l'étape f), le terminal mobile (2) établit la connexion radiofréquence avec le lecteur (1) proche également si ladite puissance en réception est supérieur audit seuil.

4. Procédé selon l'une quelconque des revendications précédentes, dans lequel le système de détection de présence correspond à un capteur capacitif intégré au lecteur (1) proche.

5. Procédé selon l'une quelconque des revendications précédentes, dans lequel, avant la phase d'authentification, est prévue une étape d'identification complémentaire basée sur une action d'identification de l'utilisateur (U) du terminal mobile (2), ladite action d'identification consistant en une action prédéfinie sur le terminal mobile (2) pour générer un signal d'identification qui est réceptionné et analysé par le microcontrôleur pour autoriser la transmission des données d'identification authentifiées propres au terminal mobile (2) à destination de l'unité de traitement distante.

6. Procédé selon la revendication 5, dans lequel l'action d'identification correspond à une saisie d'un code sur un clavier du terminal mobile (2), ou à un contrôle biométrique sur un dispositif biométrique intégré au terminal mobile (2), ou à une reconnaissance faciale exploitant une prise d'image par une caméra intégrée au terminal mobile (2), ou à une reconnaissance vocale exploitant une prise de sons par un microphone intégré au terminal mobile (2).

7. Procédé selon l'une quelconque des revendications précédentes, dans lequel chaque lecteur (1) de contrôle d'accès comprend également au moins un système complémentaire de contrôle d'accès choisi dans la liste comprenant :
- une puce de radio-identification active afin de permettre un contrôle complémentaire d'accès selon la technologie RFID ;
- un dispositif de contrôle biométrique afin de permettre un contrôle complémentaire d'accès par biométrie ;
- un dispositif de prise d'image afin de permettre un contrôle complémentaire d'accès par reconnaissance faciale ;
- un clavier afin de permettre un contrôle complémentaire d'accès par saisie d'un code.

8. Procédé selon l'une quelconque des revendications précédentes, dans lequel, lors de l'étape d), le terminal mobile est avertit de l'action d'accès sans que cet avertissement ne soit lié à la détermination de la puissance en réception réalisée lors de l'étape b).

## Patentansprüche

1. Abgesichertes Zugangskontrollverfahren, verwendend:
- Mindestens ein abgesichertes Zugangskontrolllesegerät (1), das eine Box umfasst, die im Innern Funkkommunikationsmittel aufnimmt, die einem Mikrocontroller in Verbindung mit einer entfernten Verarbeitungseinheit zugeordnet sind; und
- mindestens ein mobiles Funkkommunikationsterminal (2), insbesondere vom Typ Telefonterminal, das von einem Benutzer (U) mit sich geführt wird;
wobei das Zugangskontrollverfahren, vor einer Authentifizierungsphase, die folgenden Schritte ausführt:
a) Der oder jedes Zugangskontrolllesegerät (1) emittiert wiederholt ein Ankündigungssignal (SA), das Sicherheitsparameter umfasst, die mindestens eine Zugangsbedingung für die Kommunikationserstellung mit dem entsprechenden Zugangskontrolllesegerät (1) definieren;
b) das mobile Terminal (2) empfängt, innerhalb eines gegebenen Reichweitenfeldes, das oder jedes Ankündigungssignal (SA) und bestimmt eine Empfangsleistung des oder jedes Ankündigungssignals (SA);
c) das mobile Terminal (2) wertet die oder jede Empfangsleistung aus, um einen Parameter, der Entfernung genannt, zu erstellen, der die Entfernung zwischen dem mobilen Terminal (2) und dem oder jedem Lesegerät (1) wiedergibt, und ein Lesegerät (1) als nahegelegenes Lesegerät (1) erkennt, in Abhängigkeit dieser Auswertung;
wobei das Zugangskontrollverfahren **dadurch gekennzeichnet ist, dass** es ferner die folgenden Schritte umfasst:
d) Das mobile Terminal (2) wird über eine Aktion, initiierter Zugang genannt, des Benutzers (U) gegenüber dem nahegelegenen Lesegerät (1) benachrichtigt und setzt die Zugangsaktion in eine Zugangsberechtigung für das nahegelegene Lesegerät (1) um, insbesondere in Abhängigkeit vom Entfernungsparameter, der dem nahegelegenen Lesegerät (1) zugeordnet ist, wobei die Zugangsaktion einer Annäherung, mit oder ohne Kontakt, einer Hand oder des Körpers des Benutzers (U) entspricht, in die Nähe eines Präsenzdetektionssystems, das im nahegelegenen Lesegerät (1) integriert ist, und wobei die Detektion der Annäherung an dieses Präsenzdetektionssystem die Sendung auslöst, durch das nahegelegene Lesegerät (1), eines neuen Ankündigungssignals (SA), die Sicherheitsparameter und einen Detektionsindex umfassend, der die Detektion dieser Annäherung signalisiert, und wobei das mobile Terminal (2) das neue Ankündigungssignal (SA) mit dem Detektionsindex empfängt und diesen Detektionsindex in eine Zugangsberechtigung umsetzt, der für die Annäherung der Hand oder des Körpers des Benutzers (U) repräsentativ ist;
e) das mobile Terminal (2) prüft, ob die Zugangsberechtigung, die repräsentativ ist für die Annäherung der Hand oder des Körpers des Benutzers (U), einer Zugangsbedingung entspricht, die durch die Sicherheitsparameter definiert ist, die im neuen Ankündigungssignal (SA) des nahegelegenen Lesegeräts (1) enthalten sind;
f) wenn die Zugangsberechtigung den Zugangsbedingung entspricht und wenn allfällige andere Zugangsbedingungen erfüllt sind, dann erstellt das mobile Terminal (2) eine Funkfrequenzverbindung mit dem nahegelegenen Lesegerät (1), wobei die Funkfrequenzverbindung die Wirkung hat, die Sendung des Ankündigungssignals durch das nahegelegene Lesegerät (1) zu hemmen, wobei die Zugangsbedingung vorschreibt, dass die Funkfrequenzverbindung zwischen dem nahegelegenen mobilen Terminal (2) und dem nahegelegenen Lesegerät (1) erst hergestellt wird, nachdem die Annäherung des Benutzers in die Nähe des nahegelegenen Lesegeräts (1) detektiert wird;
und schließlich geht das Verfahren in die Authentifizierungsphase über, in der das mobile Terminal (2) seine Identifikationsdaten übermittelt und der Mikrocontroller des nahegelegenen Lesegeräts (1) seine Identifikationsdaten authentifiziert, und an deren Ende der Mikrocontroller des nahegelegenen Lesegeräts (1) authentifizierte Identifikationsdaten, die für das mobile Terminal (2) spezifisch sind, an die entfernte Verarbeitungseinheit übermittelt;
und dass die Sendung des Ankündigungssignals (SA) durch jedes Zugangskontrolllesegerät (1) und die Funkkommunikation zwischen dem mobilen Terminal (2) und dem betreffenden Zugangskontrolllesegerät (1) über ein drahtloses Fernkommunikationsprotokoll vom Typ BLUETOOTH@, WIFI^{®}, WIBREEO, WIMAX^{®}, LORA^{®}, ZIGBEE^{®} oder Ähnliches erstellt werden.

2. Verfahren nach Anspruch 1, wobei:
- In Schritt b) das mobile Terminal (2) mindestens zwei Ankündigungssignale (SA) empfängt, die von mindestens zwei getrennten Lesegeräten (1) stammen; und
- in Schritt c) das mobile Terminal (2) die Empfangsleistung jedes Lesegeräts (1) vergleicht und das nahegelegene Lesegerät (1) als dasjenige bestimmt, dessen entsprechende Empfangsleistung die höchste ist.

3. Verfahren nach einem der vorhergehenden Ansprüche, wobei in Schritt e) das mobile Terminal (2) auch die Empfangsleistung des Ankündigungssignal (SA) des nahegelegenen Lesegeräts (1) mit einem vordefinierten Schwellenwert vergleicht, und in Schritt f) das mobile Terminal (2) die Funkfrequenzverbindung mit dem nahegelegenen Lesegerät (1) auch dann erstellt, wenn die Empfangsleistung höher ist als der Schwellenwert.

4. Verfahren nach einem der vorhergehenden Ansprüche, wobei das Präsenzdetektionssystem einem kapazitiven Sensor entspricht, der im nahegelegenen Lesegerät (1) integriert ist.

5. Verfahren nach einem der vorhergehenden Ansprüche, wobei, vor der Authentifizierungsphase, ein zusätzlicher Identifikationsschritt vorgesehen ist, der auf einer Identifikationsaktion des Benutzers (U) des mobilen Terminals (2) basiert, wobei die Identifikationsaktion aus einer Aktion besteht, die auf dem mobilen Terminal (2) vordefiniert ist, um ein Identifikationssignal zu erzeugen, das vom Mikrocontroller empfangen und analysiert wird, um die Übermittlung authentifizierter Identifikationsdaten zu autorisieren, die für das mobile Terminal (2) spezifisch sind, an die entfernte Verarbeitungseinheit.

6. Verfahren nach Anspruch 5, wobei die Identifikationsaktion einer Eingabe eines Codes auf einer Tastatur des mobilen Terminals (2) entspricht oder einer biometrischen Kontrolle in einer biometrischen Vorrichtung, die im mobilen Terminal (2) integriert ist, oder einer Gesichtserkennung, die eine Bildaufnahme durch eine Kamera nutzt, die im mobilen Terminal (2) integriert ist, oder einer Spracherkennung, die eine Tonaufnahme durch ein Mikrofon nutzt, das im mobilen Terminal (2) integriert ist.

7. Verfahren nach einem der vorhergehenden Ansprüche, wobei jedes Zugangskontrolllesegerät (1) auch mindestens ein zusätzliches Zugangskontrollsystem umfasst, das aus der Liste ausgewählt ist, die umfasst:
- Einen aktiven Funkidentifikationschip, um eine zusätzliche Zugangskontrolle gemäß der Technologie RFID zu ermöglichen;
- eine biometrische Kontrollvorrichtung, um eine zusätzliche Zugangskontrolle durch Biometrie zu ermöglichen;
- eine Bildaufnahmevorrichtung, um eine zusätzliche Zugangskontrolle durch Gesichtserkennung zu ermöglichen;
- eine Tastatur, um eine zusätzliche Zugangskontrolle durch Eingabe eines Codes zu ermöglichen.

8. Verfahren nach einem der vorhergehenden Ansprüche, wobei in Schritt d) das mobile Terminal über die Zugangsaktion benachrichtigt wird, ohne dass diese Benachrichtigung mit der Bestimmung der Empfangsleistung, die in Schritt b) realisiert wird, zusammenhängt.

## Claims

1. A secure access control method using:
- at least one secure access control reader (1) comprising a box internally receiving radiocommunication means associated to a microcontroller in connection with a remote processing unit; and
- at least one radiocommunication mobile terminal (2), in particular of the telephone terminal type, carried by a user (U);
said access control method implementing, prior to an authentication phase, the following steps:
a) the or each access control reader (1) repeatedly emits an announcement signal (SA) comprising security parameters defining at least one condition for access to a communication with the corresponding access control reader (1);
b) the mobile terminal (2) receives, within a given range, the or each announcement signal (SA) and determines a receiving power of the or each announcement signal (SA);
c) the mobile terminal (2) evaluates the or each receiving power in order to establish a parameter called distance parameter translating the distance between the mobile terminal (2) and the or each reader (1), and recognizes a reader (1) as being a close reader (1) depending on this evaluation;
said access control method being **characterized in that** it further comprises the following steps:
d) the mobile terminal (2) is notified of an action called access action initiated by the user (U) vis-a-vis the close reader (1) and translates said access action by an access pass to said close reader (1), in particular depending on the distance parameter associated to said close reader (1), said access action corresponding to an approach, with or without contact, of a hand or a body of the user (U), in the vicinity of a presence detection system integrated into the close reader (1), and the detection of said approach by said presence detection system causes the emission, by said close reader (1), of a new announcement signal (SA) comprising the security parameters and a detection index signaling the detection of said approach, and the mobile terminal (2) receives the new announcement signal (SA) with said detection index and translates this detection index into an access pass representative of said approach of the hand or the body of the user (U);
e) the mobile terminal (2) checks whether the access pass representative of said approach of the hand or the body of the user (U) corresponds to an access condition defined by the security parameters contained in the new announcement signal (SA) of said close reader (1);
f) if the access pass corresponds to said access condition and if the possible other access conditions are met, then the mobile terminal (2) establishes a radiofrequency connection with the close reader (1), said radio frequency connection having the effect of inhibiting the emission of the announcement signal by said reader (1), said access condition requiring that the radio frequency connection between the mobile terminal (2) and the close reader (1) is established only after the detection of the approach of the user (U) in the vicinity of the close reader (1);
and finally the method passes into the authentication phase in which the mobile terminal (2) transmits its authenticated identification data and the microcontroller authenticates the authenticated identification data, and at the end of which the microcontroller of the access control reader (1) transmits the authenticated identification data specific to said mobile terminal (2) to the remote processing unit;
**and in that** the emission of the announcement signal (SA) by each access control reader (1) and the radiocommunication between the mobile terminal (2) and the concerned access control reader (1) are established according to a long-distance wireless communication protocol of the BLUETOOTH^{®}, WIFI^{®},WIBREE^{®}, WIMAX^{®}, LORA^{®}, ZIGBEE^{®} type or the like.

2. The method according to claim 1, wherein:
- during step b), the mobile terminal (2) receives at least two announcement signals (SA) from at least two distinct readers (1); and
- during step c), the mobile terminal (2) compares the receiving powers of each reader (1) and determines the close reader (1) as being that whose corresponding receiving power is the highest.

3. The method according to any one of the preceding claims, wherein, during step e), the mobile terminal (2) also compares the receiving power of the announcement signal (SA) of the close reader (1) with a predefined threshold and, during step f), the mobile terminal (2) establishes the radio frequency connection with the close reader (1) also if said receiving power is greater than said threshold.

4. The method according to claim any one of the preceding claims, wherein the presence detection system corresponds to a capacitive sensor integrated into the close reader (1).

5. The method according to any one of the preceding claims, wherein, prior to the authentication phase, a complementary identification step is provided, based on an identification action of the user (U) of the mobile terminal (2), said identification action consisting in a predefined action on the mobile terminal (2) to generate an identification signal which is received and analyzed by the microcontroller in order to authorize the transmission of the authenticated identification data specific to the mobile terminal (2) to the remote processing unit.

6. The method according to claim 5, wherein the identification action corresponds to an input of a code on a keyboard of the mobile terminal (2), or to a biometric control on a biometric device integrated into the mobile terminal (2), or to a facial recognition using an image capturing by a camera integrated into the mobile terminal (2), or to a voice recognition using a sound recording by a microphone integrated into the mobile terminal (2).

7. The method according to any one of the preceding claims, wherein each access control reader (1) also comprises at least one complementary access control system selected from the list comprising:
- an active radio-identification chip to allow a complementary access control according to the RFID technology;
- a biometric control device to allow a complementary access control by biometry;
- an image capturing device to allow a complementary access control by facial recognition;
- a keyboard to allow a complementary access control by inputting a code.

8. The method according to any one of the preceding claims, wherein, during step d), the mobile terminal is notified of the access action without this warning being linked to the determination of the receiving power carried out during step b).
